# EUROPÄISCHE PATENTANMELDUNG

(11) **EP 2 322 813 A2**
(43) Veröffentlichungstag der Anmeldung: **18.05.2011**
(21) Anmeldenummer: 10014459.1
(22) Anmeldetag: 10.11.2010
(51) Int. Cl.: F16B 7/04, F16B 7/06, F16B 37/04

(54) **Verbindunsbeschlag**

(30) Priorität: 11.11.2009 AT 17832009
(71) Anmelder: Marchhart GmbH, 7201 Neudörfl (AT)
(72) Erfinder: Preissegger, Günter, 7033 Pöttsching (AT)

(57) **Zusammenfassung**

Die Erfindung betrifft einen Verbindungsbeschlag für das werkzeuglos lösbare mechanische Verbinden zweier Bauteile. Der Verbindungsbeschlag weist einen Bolzen auf, dessen beide Enden als Gewindebolzen mit zueinander entgegengesetzt ausgerichteten Gewindegängen ausgebildet sind, die mit jeweils einem Mutternteil der an einem der miteinander zu verbindenden Teile verankerbar ist, in Gewindeeingriff zu bringen sind.

Der Bolzen (11) ist in seinem mittleren Längsbereich (11.1) mit einer Handhabe (12) versehen, welche mit dem Bolzen (11) zwar gegen Relativdrehung um die Achse der Schraubengewinde der Gewindebolzen (11.2, 11.3) drehfest verbunden ist, an dem Bolzen (11) aber axial verschiebbar ist.

Ein sehr vorteilhafter Einsatzfall für den Verbindungsbeschlag ist das aneinander wiederholt werkzeuglos lösbare Verbinden von zueinander in verschiedenen einstellbaren Lagen anordenbaren Möbelteilen.

## Beschreibung

Die Erfindung betrifft einen Verbindungsbeschlag für das werkzeuglos lösbare mechanische Verbinden zweier Bauteile.

Ein sehr vorteilhafter Einsatzfall für den Verbindungsbeschlag ist das aneinander wiederholt werkzeuglos lösbare Verbinden von zueinander in verschiedenen einstellbaren Lagen anordenbaren Möbelteilen.

Die DE 196 40 073 C2 zeigt eine Vorrichtung zum Verbinden flächiger Betonbauteile. Die Vorrichtung weist einen Bolzen auf, dessen beide Enden als Gewindebolzen mit zueinander entgegengesetzt ausgerichteten Gewindegängen ausgebildet sind. Der Bolzen ragt mit jeweils einem Gewindeende an bzw. in einen der beiden miteinander zu verbindenden Teile und ist an diesem über einen Mutternteil verankert. Im Längsbereich zwischen den beiden Gewindeenden ist der Bolzen mit einem Eingriffsteil, typischerweise einem Sechskantkopf starr verbunden. Durch Drehen an diesem Eingriffsteil wird der Bolzen gedreht und über den Gewindeeingriff der Muttern werden die zu verbindenden Teile aneinander gezogen oder voneinander weg geschoben. An einer der beiden Seiten ist die Verbindung zwischen Bolzen und zu fixierendem Teil über eine C-Profilschiene gebildet, welche in dem Teil fixiert ist und in welche ein typischerweise als Hammerkopfmutter ausgebildeter Mutternteil eingelegt ist, welcher an den einwärts gekrümmten Enden der Profilflanken anliegt. Wenn der Eingriffsteil so gedreht wird, dass die zu verbindenden Teile aneinander gezogen werden, kommt im Normalfall nur einer der beiden Teile am Eingriffsteil am Bolzen zum Anliegen. Wie sonst auch bei Schraubverbindungen kann zwischen Eingriffsteil (entspricht Schraubenkopf) und dem zu verbindenden Teil eine - oft auch in komplementärer Form, nämlich mit einer mittigen Mutternhülse und beidseitigen, voneinander getrennten Gewindebolzen, werden an vielen Anwendungsgebieten für das mechanische Verbinden von zwei Teilen bei einstellbarem Abstand verwendet. Der Eingriffsteil ist dabei manchmal auch als Rändelmutter oder ähnlich ausgebildet, sodass er direkt mit der Hand gefasst und gedreht werden kann, ohne dass dafür ein separates Werkzeug erforderlich ist.

Nachteilig an der Bauweise ist, dass es im allgemeinen nicht möglich ist, beide miteinander zu verbindenden Teile unter Druck an dem Einstellteil bzw. an einer an diesem anliegenden Unterlegscheibe anliegen zu lassen, da dazu die Einschraublängen an beiden Seiten des Bolzen extrem exakt aufeinander abgestimmt sein müssten. Derartiges beidseitiges Anliegen auf Druck, ist aber wünschenswert und zwar aus Gründen der Statik, der Spielfreiheit und der drehfesten Fixierung.

Die DE 201 20 967 U1 zeigt einen Tisch dessen Plattenränder mit einer Schiene mit hinterschnittener Nut versehen sind. In der Nut ist ein Mutternteil drehfest aber linear verschiebbar eingelegt. An diesem Mutternteil kann ein Anbauteil an den Tisch, beispielsweise eine vertikale Blende, mittels einer Schraube fixiert werden, welche allerdings durch eine Schraubendurchgangsbohrung im Anbauteil verlaufen muss. Die Verbindung ist zwar spielfrei ausbildbar, aber die erforderliche Schraubendurchgangsbohrung bedeutet eine störende Einschränkung ihrer Einsetzbarkeit.

Die der Erfindung zu Grunde liegende Aufgabe besteht darin, einen Verbindungsbeschlag für das werkzeuglos lösbare, gut spielfreie mechanische Verbinden zweier Bauteile bereitzustellen wobei es nicht erforderlich ist, dass einer der zu verbindenden Bauteile eine Durchgangsbohrung aufweist.

Um die Aufgabe zu lösen wird vorgeschlagen - wie bei der DE 196 40 073 C2 - einen Gewindebolzen zu verwenden, der an seinen beiden Enden entgegengesetzt ausgerichtete Schraubengewinde aufweist und mit jeweils einem dieser Enden in einem Mutternteil an einem der miteinander zu verbindenden Teile in Eingriff ist. Erfindungsgemäß ist vorgesehen, dass der Bolzen in seinem mittleren Längsbereich mit einer Handhabe versehen ist, welche mit dem Bolzen zwar gegen Relativdrehung um die Achse der Schraubengewinde drehfest verbunden ist, an dem Bolzen aber axial verschiebbar ist. Damit kann der Bolzen so lange in jener Drehrichtung gedreht werden, bei welcher die beiden zu verbindenden Teilen aneinander gezogen werden, bis beide Teile an der Handhabe oder allenfalls an jeweils einem zwischen Handhabe und zu verbindendem Teil angeordneten Distanzteil anliegen.

Die Erfindung wird an Hand von Zeichnungen zu einem vorteilhaften Ausführungsbeispiel näher erläutert:

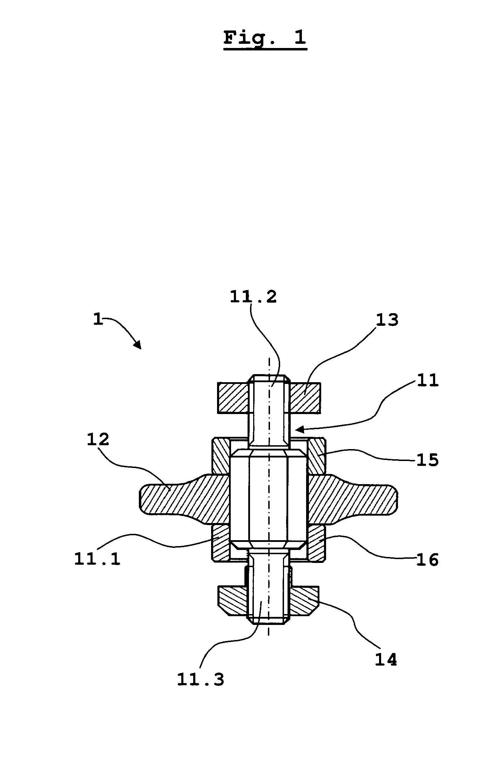

- Fig. 1:: zeigt einen beispielhaften erfindungsgemäßen Verbindungsbeschlag in einer Teilschnittansicht mit achsparalleler Schnittebene.
- Fig. 2:: zeigt den Verbindungsbeschlag von Fig. 1 in einer typischen Einbausituation in Teilschnittansicht.

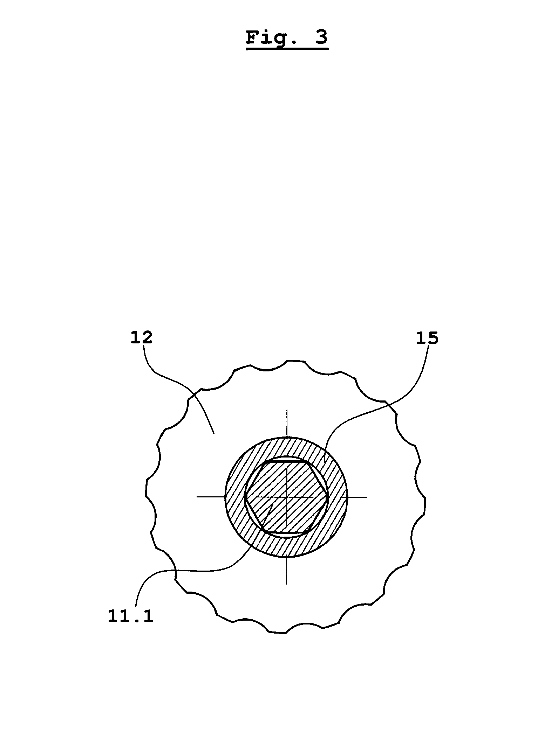

- Fig. 3:: zeigt den Verbindungsbeschlag von Fig. 1 in einer Teilschnittansicht mit zur Achse normaler Schnittebene.

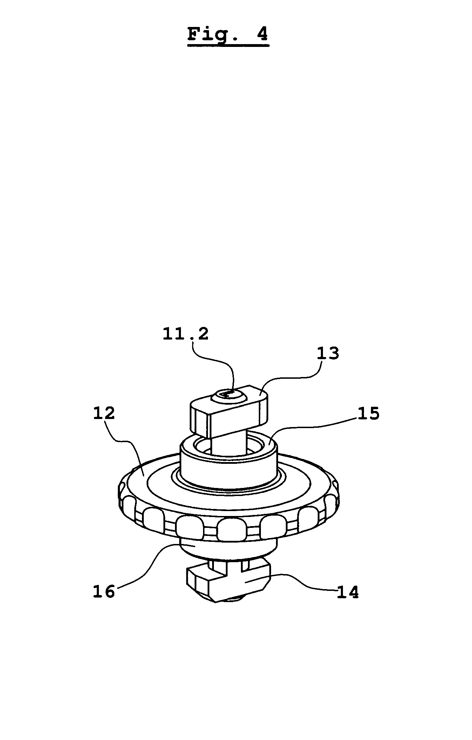

- Fig. 4:: zeigt den Verbindungsbeschlag von Fig. 1 in einer Schrägrissansicht.

Der beispielhaft dargestellte erfindungsgemäße Verbindungsbeschlag 1 besteht aus einem Bolzen 11 einer Handhabe 12 zwei Hammerkopfmuttern 13, 14 und zwei Distanzringen 15, 16.

Ein Endbereich des Bolzens 11 ist als Gewindebolzen 11.2 mit einem linksgängigen Schraubengewinde ausgeführt, der zweite Endbereich des Bolzens 11 ist als Gewindebolzen 11.3 mit einem rechtsgängigen Schraubengewinde ausgeführt. Die Querschnittsfläche des dazwischen liegenden Längenbereichs 11.1 des Bolzens 11 ist (bei dem dargestellten Beispiel) ein regelmäßiges Sechseck.

Die Handhabe 12 verläuft als Ring um den Längsbereich 11.1 in Umfangsrichtung. Im dargestellten Beispiel ist sie als Ring mit einer Rändelung am Außendurchmesser ausgeführt. Die Ränder der inneren Ausnehmung sind als komplementäres Sechseck zu der sechseckigen Querschnittsfläche des Längsbereichs 11.1 des Bolzens ausgebildet, wobei idealerweise zwischen Handhabe 12 und Längsbereich 11.1 des Bolzens 11 eine leichte Spielpassung besteht. Die Handhabe 12 ist gegenüber dem Bolzen 11.1 an dessen Längsbereich 11.1 axial verschiebbar, nicht aber in Umfangsrichtung verdrehbar. Durch Drehung der Handhabe 12 um die mit dem Bolzen 11 gemeinsame Achse wird also auch der Bolzen 11 um diese Achse gedreht.

Wichtig ist, dass sich die Handhabe in Radialrichtung so weit erstreckt, dass sie gut mit einer Hand gefasst werden kann und dass durch Drehung von Hand aus ein ausreichend großes Drehmoment um die Achse des Bolzens 11 aufgebracht werden kann, damit die Hammerkopfmuttern ausreichend fest anziehbar sind. Die diesbezügliche detaillierte Auslegung liegt im Bereich des fachmännischen Handelns und wird deshalb hier nicht weiter erörtert.

Die Distanzringe 15, 16 verlaufen jeweils an einer Seite der Handhabe 12 zwischen Handhabe 12 und Hammerkopfschraube 13, 14 um den Längsteil 11.1 bzw. den Gewindebolzen 11.2, 11.3 herum. Der Innendurchmesser der Distanzringe 15, 16 ist ausreichend groß, dass die Distanzringe gegenüber dem Bolzen 11 jedenfalls in Axialrichtung verschiebbar sind, sie sollten auch in Umfangsrichtung verschiebbar sein.

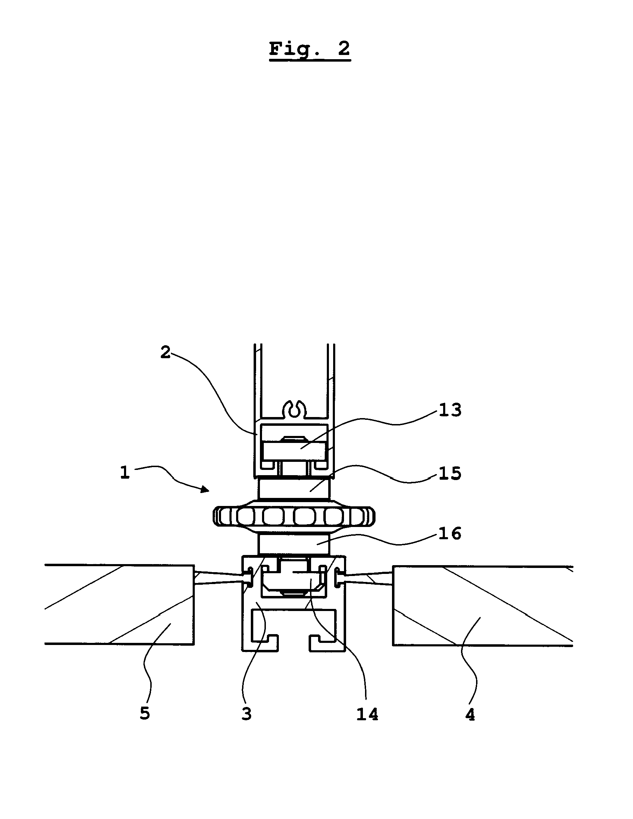

An den Gewindebolzen 11.2, 11.3 des Bolzens 11 sind Hammerkopfmuttern 13, 14 mit zu dem jeweiligen Schraubengewinde komplementärem Mutterngewinde in Gewindeeingriff. Wenn der Bolzen 11 um seine Achse gedreht wird und die Hammerkopfmuttern gegen Drehung gehalten werden - beispielsweise indem sie wie in Fig. 2 dargestellt an Wänden einer Nut in einem zu befestigenden Teil anliegen - werden die Hammerkopfmuttern in Abhängigkeit von der Drehrichtung des Bolzens in Axialrichtung aufeinander zu oder voneinander weg bewegt.

In Fig. 2 ist beispielhaft ein typischer, vorteilhafter Einsatzfall skizziert. Eine horizontal verlaufende Profilschiene 3, welche an ihrer Oberseite eine hinterschnittene Nut aufweist ist Teil des Gestelles einer Schreibtischkombination mit zwei stirnseitig aneinander gereihten Arbeitsflächen 4, 5. Zwischen den beiden Arbeitsflächen ist eine vertikal nach oben ragende Fläche zu befestigen, beispielsweise eine Pinwand. Der untere Rand dieser Fläche ist durch eine Profilschiene 2 gebildet, welche an ihrer Unterseite ebenfalls eine hinterschnittene Nut aufweist.

Die vertikale Fläche und das Tischgestell werden über die beiden Profilschienen 2, 3 miteinander verbunden, indem jeweils eine Hammermutter 13, 14 des erfindungsgemäßen Verbindungsbeschlags 1 in eine hinterschnittene Nut einer Profilschiene 2, 3 eingeschoben wird und indem die Handhabe 12 des Verbindungsbeschlags 1 so gedreht wird, dass die beiden Hammermuttern aneinander gezogen werden, bis die einwärts gekrümmten Profilflankenenden, durch welche die Hinterschneidungen der Nuten in den Profilschienen 2, 3 gebildet sind, zwischen einer Hammermutter 13, 14 einerseits und einem Distanzring 15, 16 andererseits eingeklemmt sind.

Indem nicht nur die Distanzringe 15, 16 sondern auch die Handhabe 11 am Bolzen 1 in Axialrichtung verschiebbar sind wird erreicht, dass immer beide aneinander zu befestigenden Teile 2, 3 zwischen Hammermutter 13, 14 und Distanzring 15, 16 eingeklemmt werden, da Handhabe und Distanzringe bei der Einschraubbewegung durch die als erstes an ihnen zum Anliegen kommende Profilschienen 2, 3 zur jeweils anderen Profilschiene hin geschoben werden, bis sie auch an diesem anliegen.

Indem die Berührungsfläche zwischen den Distanzringen 15, 16 einerseits und der Handhabe 12 andererseits um den ganzen Umfang als reine Rotationsfläche um die Achse des Bolzens 11 ausgebildet ist, kann man dort günstige Reibungsverhältnisse einstellen, nämlich solche mit niedriger Reibung zwischen den Teilen, sodass man ohne großen Kraftaufwand die Handhabe so lange drehen kann, bis Teile der Profilschienen 2, 3 sehr fest zwischen Hammermuttern und Distanzringen eingeklemmt sind. Die Berührungsfläche kann problemlos auch ausreichend groß ausgebildet werden, sodass an ihr auch bei großen Kräften eine niedrige Flächenpressung vorliegt.

Wenn man den Durchmesser des Längsteils 11.1 des Bolzens 11 kleiner als den Durchmesser der Gewindebolzen 11.2, 11.3 machen würde, oder wenn man die Axialerstreckung der Handhabe 12 länger machen würde als die Axialerstreckung des Längsteils 11.1 des Bolzens 11, so könnte man zwar auch auf die Distanzringe 15, 16 verzichten, die Handhabe 12 würde dann aber beim Anziehen direkt an den zu befestigenden Profilschienen 2, 3 reiben und diese Teile würden sich in die Handhabe eindrücken und dort unregelmäßige Vertiefungen verursachen. Damit würde es wesentlich schwieriger die Handhabe 12 wirklich fest anzuziehen, insbesondere mehrfaches Anziehen und Lösen würde wegen der entstehenden unregelmäßigen Vertiefungen an den Stirnseiten der Handhabe immer schwieriger. Der Bolzen 11 sowie die Hammermuttern 13, 14 bestehen im Normafall aus Stahl. Aus Gründen der damit erreichbaren niedrigen Reibung zwischen Handhabe 12 und Distanzringen 15, 16 sowie aus Gründen der Haptik ist es vorteilhaft die Handhabe aus Kunststoff auszubilden. Damit trotz der gegenüber Stahl geringen Festigkeit von Kunststoff ausreichend Drehmoment von der Handhabe 12 auf den Bolzen 11 übertragen werden kann, sollte der Längsbereich 11.1 des Bolzens 11 an welchem die Handhabe 12 angreift mit mindestens 1,5-fachem Durchmesser, besser zweifachem Durchmesser als dem Durchmesser der Gewindebolzen 11.2, 11.3 ausgebildet sein. Ebenfalls aus Gründen der Reibung, aber auch um Beschädigung der zu verbindenden Teile zu vermeiden, ist es vorteilhaft auch die Distanzringe 15, 16 aus einem weicheren Material aus Stahl auszubilden. Vorteilhaft ist jedenfalls Kunststoff, möglich wären aber auch relativ weiche Metalle wie Kupfer oder Aluminium.

## Patentansprüche

1. Beschlag für das werkzeuglos lösbare mechanische Verbinden zweier Bauteile, welcher einen Bolzen aufweist, dessen beide Enden als Gewindebolzen mit zueinander entgegengesetzt ausgerichteten Gewindegängen ausgebildet sind, die mit jeweils einem Mutternteil die an jeweils einem der miteinander zu verbindenden Teile verankerbar sind, in Gewindeeingriff zu bringen sind,
**dadurch gekennzeichnet, dass**
der Bolzen (11) in seinem mittleren Längsbereich (11.1) mit einer Handhabe (12) versehen ist, welche mit dem Bolzen (11) zwar gegen Relativdrehung um die Achse der Schraubengewinde der Gewindebolzen (11.2, 11.3) drehfest verbunden ist, an dem Bolzen (11) aber axial verschiebbar ist.

2. Beschlag nach Anspruch 1, **dadurch gekennzeichnet, dass** die Handhabe (12) aus Kunststoff besteht und dass der Längsbereich (11.1) des Bolzens (1) einen um mindestens 50%, bevorzugt etwa 100% größeren Durchmesser aufweist als die Gewindebolzen (11.2, 11.3).

3. Beschlag nach einem der bisherigen Ansprüche, **dadurch gekennzeichnet, dass** in Axialrichtung des Bolzen (11) an jeder Seite der Handhabe (12) ein Distanzring (15, 16) um den Bolzen (11) herum verläuft, welcher gegenüber dem Bolzen (11) axial und in Umfangsrichtung verschiebbar ist und dass die Berührungsfläche zwischen Distanzring (15, 16) und Handhabe (12) eine in Umfangsrichtung ununterbrochene Rotationsfläche ist.

4. Beschlag nach Anspruch 3, **dadurch gekennzeichnet, dass** die Distanzringe (15, 16) aus einem weicheren Material als Stahl, bevorzugt aus Kunststoff bestehen.

5. Beschlag nach einem der bisherigen Ansprüche, **dadurch gekennzeichnet, dass** er dazu verwendet wird zueinander in verschiedenen einstellbaren Lagen anordenbare Möbelteile aneinander zu fixieren.

6. Beschlag nach Anspruch 5, **dadurch gekennzeichnet, dass** zumindest einer der beiden miteinander zu verbindenden Möbelteile an der dem anderen Teil zugewandten Seite mit einer Profilschiene (2, 3) ausgestattet ist, die eine zum anderen Teil hin offene, hinterschnittene Nut aufweist und dass eine mit einem Gewindebolzen (11.2, 11.3) des Verbindungsbeschlages (1) in Eingriff befindliche Hammermutter (13, 14) in dieser hinterschnittenen Nut angeordnet ist.
